# EUROPEAN PATENT APPLICATION

(11) **EP 4 431 319 A1**
(43) Date of publication of application: **18.09.2024**
(21) Application number: 22891722.5
(22) Date of filing: 12.10.2022
(51) Int. Cl.: B60H 1/00, H01M 10/615, B60L 58/27

(54) **ELECTRIC AUTOMOBILE LOW-TEMPERATURE DRIVING THERMAL MANAGEMENT CONTROL METHOD, SYSTEM, AND AUTOMOBILE**

(30) Priority: 09.11.2021 CN 202111317334
(71) Applicant: Guangzhou Automobile Group Co. Ltd., Guangzhou, Guangdong 510030 (CN)
(72) Inventor: GUO, Zihan, Guangzhou, Guangdong 511434 (CN); LI, Rundong, Guangzhou, Guangdong 511434 (CN); CHEN, Bang, Guangzhou, Guangdong 511434 (CN); MA, Xiangming, Guangzhou, Guangdong 511434 (CN)
(74) Representative: Zaboliene, Reda
(86) International application number: PCT/CN2022/124944
(87) International publication number: WO 2023/082923

(57) **Abstract**

The present invention provides an electric automobile low-temperature driving thermal management control method, a system, and an automobile. The method comprises: measuring an actual temperature of coolant on an air conditioner side; generating a corresponding passenger compartment heating priority signal according to the actual temperature and a target temperature of an air conditioner; determining an initial value according to the passenger compartment heating priority signal, a battery thermal management demand signal, and a current vehicle state; controlling heating of a passenger compartment and battery heating according to the determined initial value, to obtain a battery heating result; looking up a preset proportional valve adjustment table according to the battery heating result, to obtain an adjustment amount, and adding the adjustment amount and the initial value, to obtain a current adjustment value of an opening of a three-way proportional valve; acquiring the current adjustment value of the opening of the three-way proportional valve, and controlling the three-way proportional valve according to the current adjustment value. In the present invention, proper configuration of the overall thermal management of the vehicle is achieved by means of controlling the opening of the three-way proportional valve, so that a heating effect and discharge capacity of the battery are improved, while the heating of the passenger compartment is satisfied.

## Description

### TECHNICAL FIELD

The present disclosure relates to the field of low-temperature driving thermal management for electric automobile, and more specifically relates to an electric automobile low-temperature driving thermal management control method, system, and automobile.

### BACKGROUND

In low-temperature environments, as both the passenger compartment of the electric automobile and the power battery system have heating needs, and how to distribute thermal management between the two is a more difficult subject. There are more distribution methods about the thermal management of the whole automobile in the low-temperature environment, some of them use two independent heaters, the passenger compartment heating and the power battery heating are respectively equipped with the heaters, which is simple to control, but the cost is high; some of them use a single heater, but the heat distribution method is relatively simple and does not change with the state of the whole automobile, and does not take into account the heating of the passenger compartment and the heating of the power battery to dynamically adjust the strategy of heat management distribution.

As described above, there is a situation in which heat from an air conditioning circuit is brought to a power battery temperature control circuit by means of a heat exchanger, and the heat is brought to a battery pack by means of a shut-off valve and a water pump in the power battery temperature control circuit to heat the battery. However, the current existing electric automobile power battery heating control methods are unable to realize the effective distribution control of the heat of both. In the low-temperature environments, it is difficult for a single heater to meet the needs of both passenger compartment heating and battery heating simultaneously, and it is necessary to choose between the two. For driving conditions, the heating priority of the passenger compartment is higher than the heating priority of the power battery, and the purpose of heating the power battery is to increase the discharge capacity of the power battery and increase its range. If the power battery is not heated, the performance of the electric automobile will be poor. Therefore, how to reasonably heat the power battery while meeting the heating needs of the passenger compartment under driving conditions is currently a major challenge.

### SUMMARY

The purpose of the present disclosure is to provide an electric automobile low-temperature driving thermal management control method, system, and automobile, the present disclosure solves the technical problem that the existing method cannot reasonably and effectively realize the dynamic control of heat when both the passenger compartment and the battery need to be heated.

On one aspect, an electric automobile low-temperature driving thermal management control method is provided, the method includes:
during low-temperature driving of an electric automobile, in response to a passenger compartment heating signal, detecting an actual temperature of coolant on an air conditioner side, and generating a corresponding passenger compartment heating priority signal according to the actual temperature and a target temperature of an air conditioner;
obtaining the passenger compartment heating priority signal and a battery thermal management demand signal, and determining an initial value of an opening of a three-way proportional valve according to the passenger compartment heating priority signal, the battery thermal management demand signal, and a current vehicle state;
controlling a passenger compartment heating and a battery heating according to a determined initial value of the opening of the three-way proportional valve and obtaining a battery heating result;
looking up a preset proportional valve adjustment table according to the battery heating result, to obtain an adjustment amount of the opening of the three-way proportional valve, and adding the adjustment amount of the opening of the three-way proportional valve and the initial value of the opening of the three-way proportional valve, to obtain a current adjustment value of the opening of the three-way proportional valve; and
obtaining the current adjustment value of the opening of the three-way proportional valve and controlling the three-way proportional valve according to the current adjustment value of the opening of the three-way proportional valve.

Preferably, the generating the corresponding passenger compartment heating priority signal according to the actual temperature and the target temperature of the air conditioner, includes:
determining whether a difference between the actual temperature and the target temperature of the air conditioner meets a preset priority threshold range;
determining passenger compartment heating priority is high and generating the corresponding passenger compartment heating priority signal as the passenger compartment heating priority is high when the difference between the actual temperature and the target temperature of the air conditioner is within the preset priority threshold range; and
determining passenger compartment heating priority is low and generating the corresponding passenger compartment heating priority signal as the passenger compartment heating priority is low when the difference between the actual temperature and the target temperature of the air conditioner is not within the preset priority threshold range.

Preferably, the determining the initial value of the opening of the three-way proportional valve, includes:
setting the initial value of the opening of the three-way proportional valve to a first initial value when the passenger compartment heating priority is high; and
setting the initial value of the opening of the three-way proportional valve to a second initial value when the passenger compartment heating priority is low;
wherein the first initial value is less than the second initial value.

Preferably, the obtaining the battery heating result, includes:
detecting a real-time temperature value of coolant of a battery circuit;
determining that a temperature of the coolant of the battery is sufficient, and the battery heating result is generated as a heating temperature is sufficient when the real-time temperature value of the coolant of the battery circuit is greater than or equal to a preset target temperature value; and
determining that the temperature of the coolant of the battery is insufficient, and the battery heating result is generated as the heating temperature is insufficient when the real-time temperature value of the coolant of the battery circuit is less than the preset target temperature value.

Preferably, the looking up a preset proportional valve adjustment table according to the battery heating result, to obtain an adjustment amount of the opening of the three-way proportional valve, includes:
querying the preset proportional valve adjustment table based on the difference between the real-time temperature value of the coolant of the battery circuit and the target temperature value to obtain a reduction in the opening of the three-way proportional valve when the battery heating result is that the heating temperature is sufficient; and
querying the preset proportional valve adjustment table based on the difference between a real-time temperature value of a coolant of a circuit of the air conditioner side and the target temperature value to obtain an increase in the opening of the three-way proportional valve when the battery heating result is that the heating temperature is insufficient.

Preferably, the method further includes:
determining whether the difference between the real-time temperature value of the coolant of the battery circuit and the target temperature value meets a predetermined temperature difference change range threshold value when querying the preset proportional valve adjustment table based on the difference between the real-time temperature value of the coolant of the battery circuit and the target temperature value;
determining that control of thermal management is in a stable state and the opening of the three-way proportional valve is not adjusted if the difference between the real-time temperature value of the coolant of the battery circuit and the target temperature value is within the predetermined temperature difference change range threshold value; and
determining that the control of the thermal management is in an unstable state, querying the preset proportional valve adjustment table to obtain a real-time adjustment amount of the opening of the three-way proportional valve based on the difference between the real-time temperature value of the coolant of the battery circuit and the target temperature value, and controlling the opening of the three-way proportional valve according to the real-time adjustment amount if the difference between the real-time temperature value of the coolant of the battery circuit and the target temperature value exceeds the predetermined temperature difference change range threshold value.

Preferably, the method further includes:
adjusting the opening of the three-way proportional valve according to a preset interval time node when the adjustment amount of the opening of the three-way proportional valve is obtained.

On another aspect, an electric automobile low-temperature driving thermal management control system is provided, and the system is configured for implementing the electric automobile low-temperature driving thermal management control method, the system includes:
an air conditioner controller configured to detect, during low-temperature driving of an electric automobile, in response to a passenger compartment heating signal, an actual temperature of coolant on an air conditioner side and generate a corresponding passenger compartment heating priority signal according to the actual temperature and a target temperature of an air conditioner;
a vehicle controller configured to obtain the passenger compartment heating priority signal and a battery thermal management demand signal, determine an initial value of an opening of a three-way proportional valve according to the passenger compartment heating priority signal, the battery thermal management demand signal, and a current vehicle state, control a passenger compartment heating and a battery heating according to the determined initial value of the opening of the three-way proportional valve, to obtain a battery heating result, look up a preset proportional valve adjustment table according to the battery heating result, to obtain an adjustment amount of the opening of the three-way proportional valve, and add the adjustment amount of the opening of the three-way proportional valve and the initial value of the opening of the three-way proportional valve, to obtain a current adjustment value of the opening of the three-way proportional valve;
a three-way proportional valve configured to acquire the current adjustment value of the opening of the three-way proportional valve and control the three-way proportional valve according to the current adjustment value of the opening of the three-way proportional valve.

On another aspect, an automobile is provided, the automobile controls low-temperature driving thermal management of the electric automobile through the electric automobile low-temperature driving thermal management control method.

In summary, the embodiment of the present disclosure has the following beneficial effects:
The electric automobile low-temperature driving thermal management control method, system, and automobile of the present disclosure, in which the air conditioner system and battery system share a heater, can achieve reasonable configuration of the vehicle thermal management under low-temperature driving conditions by controlling the opening of the three-way proportional valve, while meeting the demand of the passenger compartment heating, the heating effect of the power battery can be improved as much as possible, which can improve the discharge capacity of the battery, and thus achieve the purpose of improving the dynamics and range of the whole vehicle.

The present disclosure takes into account the demand of the passenger compartment heating and the demand of the battery system heating and utilizes the difference between the target value and the actual value of the coolant in the air conditioner heating circuit as a control variable to realize the purpose of prioritizing the demand of the passenger compartment heating and distributing the surplus heat to the power battery system. The present disclosure adds two control methods, temperature difference range deviation and adjustment step time, to reduce the impact of fluctuation of the three-way proportional valve on the effect of the passenger compartment heating during the control process.

### BRIEF DESCRIPTION OF THE DRAWINGS

In order to more clearly illustrate the technical solution of the embodiment of the present disclosure or the prior art, the accompanying drawings required in the description of the embodiment or the prior art will be briefly introduced below, obviously, the drawings in the following description are some embodiments of the present disclosure, for those skilled in the art, other drawings can also be obtained from these drawings without any creative work.
FIG. 1 is a schematic diagram of an automobile thermal management system architecture according to an embodiment of the present disclosure.
FIG. 2 is a flowchart of an electric automobile low-temperature driving thermal management control method according to an embodiment of the present disclosure.
FIG. 3 is a schematic diagram of an electric automobile low-temperature driving thermal management control system according to an embodiment of the present disclosure.

### DETAILED DESCRIPTION

In order to make the objects, technical solutions and advantages of the present disclosure clearer, the present disclosure will be described in further detail below in conjunction with the accompanying drawings.

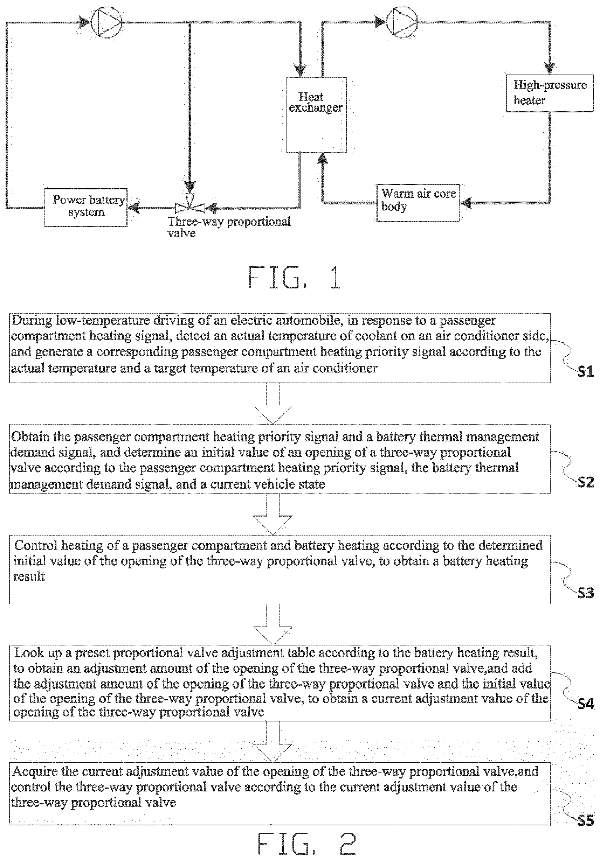

As shown in FIG. 1, the present disclosure provides an electric automobile low-temperature driving thermal management control method, the automobile thermal management system architecture referred to in the present disclosure is first briefly described: an air conditioner temperature control piping and a power battery temperature control piping are two independent sets of pipelines that exchange heat through a heat exchanger, a high-pressure heater (PTC) is installed on the air conditioner temperature control piping, and a three-way proportional valve (ECV) is installed in the power battery temperature control piping that can be used to adjust the flow rate through the heat exchanger, thereby achieving the purpose of controlling the heat distribution between the passenger compartment and the power battery.

FIG. 2 is a flowchart depicting an embodiment of an electric automobile low-temperature driving thermal management control method. In the embodiment, the method includes the following steps:

During low-temperature driving of an electric automobile, in response to a passenger compartment heating signal, detect an actual temperature of coolant on an air conditioner side, and generate a corresponding passenger compartment heating priority signal according to the actual temperature and a target temperature of an air conditioner. In other words, an air conditioner controller determines the passenger compartment heating priority signal according to the demand of the passenger compartment heating (the passenger compartment heating signal) and a temperature difference between the actual temperature of the coolant on the air conditioner side and the target temperature of the air conditioner, and sends the signal, the actual temperature of the coolant on the air conditioner side, a target temperature signal, and a PTC power to a vehicle controller (VCU) through CAN signals.

In the embodiment, determine whether the temperature difference between the actual temperature and the target temperature of the air conditioner meets a preset priority threshold range; when the temperature difference between the actual temperature and the target temperature of the air conditioner is within the preset priority threshold range, it is determined that the passenger compartment heating priority is high, and a corresponding passenger compartment heating priority signal is generated to indicate that the passenger compartment heating priority is high; when the temperature difference between the actual temperature and the target temperature of the air conditioner is not within the preset priority threshold range, it is determined that the passenger compartment heating priority is low, and a corresponding passenger compartment heating priority signal is generated to indicate that the passenger compartment heating priority is low.

Further, obtain the passenger compartment heating priority signal and a battery thermal management demand signal, and determine an initial value of an opening of a three-way proportional valve according to the passenger compartment heating priority signal, the battery thermal management demand signal, and a current vehicle state. As a result, under driving conditions, priority should be given to meeting the heating needs of the passenger compartment, and when there is surplus heat, it is distributed to the battery for heating. After receiving the signal, the VCU will provide an initial value (the initial value is obtained through low-temperature real vehicle testing) of the three-way proportional valve according to the passenger compartment heating priority signal, the battery thermal management demand signal, and the current vehicle state. Obtain the initial value of the opening of the three-way proportional valve according to the heating demand of the power battery and the passenger compartment heating priority, different priorities correspond to different initial values. When the demand of the passenger compartment heating is strong, reduce the opening of the proportional valve, and prioritize meeting the demand of the passenger compartment heating. When the demand of the passenger compartment heating is weak, increase the opening of the proportional valve, at this time, the demand of the passenger compartment heating is weak, which can distribute more heat to the battery system. The battery management system (BMS) sends the battery thermal management demand, the actual value and the target value of the coolant of the battery circuit to the vehicle controller through the CAN signals.

In the embodiment, when the passenger compartment heating priority is high, set the initial value of the opening of the three-way proportional valve to a first initial value, when the passenger compartment heating priority is low, set the initial value of the opening of the three-way proportional valve to a second initial value. The first initial value is less than the second initial value. In other words, when the passenger compartment heating priority is high, the three-way proportional valve is fixed at a smaller opening value (the higher the opening value of the three-way proportional valve, the more heat is taken away from the air conditioner side and the more heat is distributed to the battery). When the passenger compartment heating priority is low, the initial value of the three-way proportional valve will be appropriately adjusted to a larger value, but it should not be given too much, and giving too much will cause a sudden change in the temperature of the air conditioner cooling circuit, which will cause a bad feeling to the passengers.

Further, control heating of a passenger compartment and battery heating according to the determined initial value of the opening of the three-way proportional valve, to obtain a battery heating result. If the temperature of the coolant of the battery circuit is higher than the target value, the temperature of the coolant of the battery is considered to be sufficient at this time, otherwise, the temperature of the coolant of the battery is considered to be insufficient at this time.

In the embodiment, detect a real-time temperature value of the coolant of the battery circuit; when the real-time temperature value of the coolant of the battery circuit is greater than or equal to a preset target temperature value, it is determined that temperature of the coolant of the battery is sufficient at this time, and the battery heating result is generated as the heating temperature is sufficient; when the real-time temperature value of the coolant of the battery circuit is less than the preset target temperature value, it is determined that temperature of the coolant of the battery is insufficient at this time, and the battery heating result is generated as the heating temperature is insufficient.

Further, look up a preset proportional valve adjustment table according to the battery heating result, to obtain an adjustment amount of the opening of the three-way proportional valve, and add the adjustment amount of the opening of the three-way proportional valve and the initial value of the opening of the three-way proportional valve, to obtain a current adjustment value of the opening of the three-way proportional valve; in other words, calculate the change amount of the opening of the three-way proportional valve based on a difference between the real-time temperature of the coolant on the air conditioner side and a corrected target temperature, in order to prevent frequent fluctuations in water temperature due to frequent changes in opening of the proportional valve from causing frequent fluctuations in the water temperature, the amount of temperature range deviation has been increased. When the temperature difference is within the deviation, the opening of the three-way proportional valve is not adjusted. In addition, a control method is added to accumulate the change amount into the initial value every few times.

In the embodiment, when the battery heating result shows that the heating temperature is sufficient, query the preset proportional valve adjustment table based on the difference between the real-time temperature value of the coolant of the battery circuit and the target temperature value to obtain the reduction in the opening of the three-way proportional valve; when the battery heating result shows that the heating temperature is insufficient, query the preset proportional valve adjustment table based on the difference between the real-time temperature value of the coolant of the circuit of the air conditioner side and the target temperature value to obtain the increase in the opening of the three-way proportional valve; in other words, if the real-time temperature of the coolant of the battery circuit is higher than the target value, the temperature of the coolant of the battery is considered to be sufficient at this time, and the opening of the three-way proportional valve can be reduced, and at this time, the difference between the real-time temperature value of the coolant of the battery circuit and the target value is used to obtain the reduction of the opening of the valve by looking up the table. If the temperature of the coolant of the battery circuit does not reach the target value, the difference between the real-time temperature of the coolant on the air conditioner side and the target temperature signal is used to obtain the amount of change in the opening of the valve, also by looking up the table.

In order to reduce the effect of fluctuations in the opening of the valve on the passenger compartment heating, two additional controls are added to the three-way proportional valve; in a first control method, when querying the preset proportional valve adjustment table based on the difference between the real-time temperature value of the coolant of the battery circuit and the target temperature value in the above embodiments, it is determined whether or not the difference between the real-time temperature value of the coolant of the battery circuit and the target temperature value meets a predetermined temperature difference change range threshold value; if the difference between the real-time temperature value of the coolant of the battery circuit and the target temperature value is within the predetermined temperature difference change range, it is judged that the control of thermal management is in a stable state at this time, and the opening of the three-way proportional valve is not adjusted; if the difference between the real-time temperature value of the coolant of the battery circuit and the target temperature value exceeds the predetermined temperature difference change range, it is judged that the control of thermal management is in an unstable state at this time, based on the difference between the real-time temperature value of the coolant of the battery circuit and the target temperature value, the preset proportional valve adjustment table is queried to obtain the real-time adjustment amount of the opening of the three-way proportional valve, and the opening of the three-way proportional valve is controlled according to the real-time adjustment amount. In other words, when using the temperature difference to check the table, a temperature difference range is set, if the temperature difference is less than a certain range, it is considered that the thermal system is more stable at this time, without adjusting the opening of the proportional valve. If the temperature difference exceeds the range value, adjust it according to the table. For example, if the real-time temperature of the coolant on the air conditioner side is higher than the target value and exceeds the temperature difference adjustment range, the opening of the valve will be increased to distribute excess heat to the power battery system; conversely, if the real-time temperature of the coolant on the air conditioner side is less than the target value and exceeds the temperature difference adjustment range, the opening of the valve will be reduced to prioritize ensuring the demand of the passenger compartment heating.

In a second control method, when obtaining the adjustment amount of the opening of the three-way proportional valve, the opening of the three-way proportional valve is adjusted according to a preset interval time node. In other words, after using the temperature difference to check the table to obtain the amount of change in the proportional valve, the opening of the valve is not adjusted at any time, but rather adjusted at several intervals. The amount of change of the opening of the three-way proportional valve obtained through the above steps is added to the initial value of the opening, and the calculated value of the current opening of the valve is obtained.

Further, acquire the current adjustment value of the opening of the three-way proportional valve, and control the three-way proportional valve according to the current adjustment value of the opening of the three-way proportional valve. In other words, the VCU will send the calculated opening value of the three-way proportional valve to the three-way proportional valve controller through LIN communication, and the three-way proportional valve controller controls its internal motor to achieve the three-way proportional valve to a specified position.

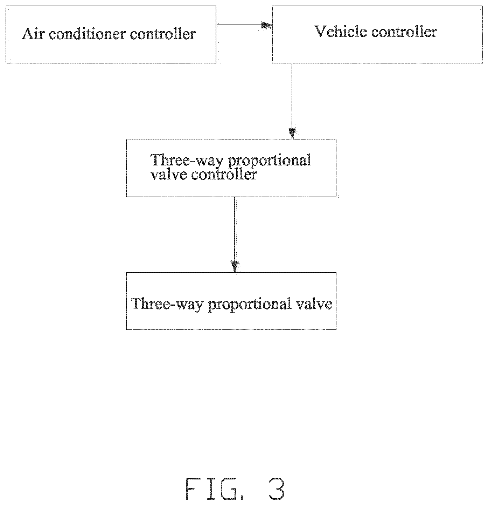

FIG. 3 illustrates an electric automobile low-temperature driving thermal management control in accordance with an embodiment of the present disclosure. In the embodiment, including:

An air conditioner controller is used to detect, during low-temperature driving of an electric automobile, in response to a passenger compartment heating signal, an actual temperature of coolant on an air conditioner side and generate a corresponding passenger compartment heating priority signal according to the actual temperature and a target temperature of an air conditioner.

A vehicle controller is used to obtain the passenger compartment heating priority signal and a battery thermal management demand signal, determine an initial value of an opening of a three-way proportional valve according to the passenger compartment heating priority signal, the battery thermal management demand signal, and a current vehicle state, control heating of a passenger compartment and battery heating according to the determined initial value of the opening of the three-way proportional valve, to obtain a battery heating result, look up a preset proportional valve adjustment table according to the battery heating result, to obtain an adjustment amount of the opening of the three-way proportional valve, and add the adjustment amount of the opening of the three-way proportional valve and the initial value of the opening of the three-way proportional valve, to obtain a current adjustment value of the opening of the three-way proportional valve.

A three-way proportional valve is used to acquire the current adjustment value of the opening of the three-way proportional valve and control the three-way proportional valve according to the current adjustment value of the opening of the three-way proportional valve.

The present disclosure further provides an automobile, the present disclosure controls the low-temperature driving thermal management of the automobile through the electric automobile low-temperature driving thermal management control method.

With regard to the specific realization process of the electric automobile low-temperature driving thermal management control system and the automobile, reference may be made to the specific realization process of the electric automobile low-temperature driving thermal management control method described above, which will not be repeated herein.

In summary, the embodiment of the present disclosure has the following beneficial effects:
The electric automobile low-temperature driving thermal management control method, system, and automobile of the present disclosure, in which the air conditioner system and battery system share a heater, can achieve reasonable configuration of the vehicle thermal management under low-temperature driving conditions by controlling the opening of the three-way proportional valve, while meeting the demand of the passenger compartment heating, the heating effect of the power battery can be improved as much as possible, which can improve the discharge capacity of the battery, and thus achieve the purpose of improving the dynamics and range of the whole vehicle.

The present disclosure takes into account the demand of the passenger compartment heating and the demand of the battery system heating and utilizes the difference between the target value and the actual value of the coolant in the air conditioner heating circuit as a control variable to realize the purpose of prioritizing the demand of the passenger compartment heating and distributing the surplus heat to the power battery system. The present disclosure adds two control methods, temperature difference range deviation and adjustment step time, to reduce the impact of fluctuation of the three-way proportional valve on the effect of the passenger compartment heating during the control process.

The above disclosure is only a preferred embodiment of the present disclosure, and of course, it cannot be used to limit the scope of the present disclosure. Therefore, the equivalent changes made according to the claims of the present disclosure still fall within the scope of the present disclosure.

## Claims

1. An electric automobile low-temperature driving thermal management control method comprising:
during low-temperature driving of an electric automobile, in response to a passenger compartment heating signal, detecting an actual temperature of coolant on an air conditioner side, and generating a corresponding passenger compartment heating priority signal according to the actual temperature and a target temperature of an air conditioner;
obtaining the passenger compartment heating priority signal and a battery thermal management demand signal, and determining an initial value of an opening of a three-way proportional valve according to the passenger compartment heating priority signal, the battery thermal management demand signal, and a current vehicle state;
controlling a passenger compartment heating and a battery heating according to a determined initial value of the opening of the three-way proportional valve and obtaining a battery heating result;
looking up a preset proportional valve adjustment table according to the battery heating result, to obtain an adjustment amount of the opening of the three-way proportional valve, and adding the adjustment amount of the opening of the three-way proportional valve and the initial value of the opening of the three-way proportional valve, to obtain a current adjustment value of the opening of the three-way proportional valve; and
obtaining the current adjustment value of the opening of the three-way proportional valve and controlling the three-way proportional valve according to the current adjustment value of the opening of the three-way proportional valve.

2. The method according to claim 1, wherein generating the corresponding passenger compartment heating priority signal according to the actual temperature and the target temperature of the air conditioner, comprises:
determining whether a difference between the actual temperature and the target temperature of the air conditioner meets a preset priority threshold range;
determining passenger compartment heating priority is high and generating the corresponding passenger compartment heating priority signal as the passenger compartment heating priority is high when the difference between the actual temperature and the target temperature of the air conditioner is within the preset priority threshold range; and
determining passenger compartment heating priority is low and generating the corresponding passenger compartment heating priority signal as the passenger compartment heating priority is low when the difference between the actual temperature and the target temperature of the air conditioner is not within the preset priority threshold range.

3. The method according to claim 2, wherein determining the initial value of the opening of the three-way proportional valve, comprises:
setting the initial value of the opening of the three-way proportional valve to a first initial value when the passenger compartment heating priority is high; and
setting the initial value of the opening of the three-way proportional valve to a second initial value when the passenger compartment heating priority is low;
wherein the first initial value is less than the second initial value.

4. The method according to claim 1, wherein obtaining the battery heating result, comprises:
detecting a real-time temperature value of coolant of a battery circuit;
determining that a temperature of the coolant of the battery is sufficient, and the battery heating result is generated as a heating temperature is sufficient when the real-time temperature value of the coolant of the battery circuit is greater than or equal to a preset target temperature value; and
determining that the temperature of the coolant of the battery is insufficient, and the battery heating result is generated as the heating temperature is insufficient when the real-time temperature value of the coolant of the battery circuit is less than the preset target temperature value.

5. The method according to claim 4, wherein looking up a preset proportional valve adjustment table according to the battery heating result, to obtain an adjustment amount of the opening of the three-way proportional valve, comprises:
querying the preset proportional valve adjustment table based on the difference between the real-time temperature value of the coolant of the battery circuit and the target temperature value to obtain a reduction in the opening of the three-way proportional valve when the battery heating result is that the heating temperature is sufficient; and
querying the preset proportional valve adjustment table based on the difference between a real-time temperature value of a coolant of a circuit of the air conditioner side and the target temperature value to obtain an increase in the opening of the three-way proportional valve when the battery heating result is that the heating temperature is insufficient.

6. The method according to claim 5, further comprising:
determining whether the difference between the real-time temperature value of the coolant of the battery circuit and the target temperature value meets a predetermined temperature difference change range threshold value when querying the preset proportional valve adjustment table based on the difference between the real-time temperature value of the coolant of the battery circuit and the target temperature value;
determining that control of thermal management is in a stable state and the opening of the three-way proportional valve is not adjusted if the difference between the real-time temperature value of the coolant of the battery circuit and the target temperature value is within the predetermined temperature difference change range threshold value; and
determining that the control of the thermal management is in an unstable state, querying the preset proportional valve adjustment table to obtain a real-time adjustment amount of the opening of the three-way proportional valve based on the difference between the real-time temperature value of the coolant of the battery circuit and the target temperature value, and controlling the opening of the three-way proportional valve according to the real-time adjustment amount if the difference between the real-time temperature value of the coolant of the battery circuit and the target temperature value exceeds the predetermined temperature difference change range threshold value.

7. The method according to claim 1, further comprising:
adjusting the opening of the three-way proportional valve according to a preset interval time node when the adjustment amount of the opening of the three-way proportional valve is obtained.

8. An electric automobile low-temperature driving thermal management control system configured for implementing a method as claimed in any one of claims 1-7, comprising:
an air conditioner controller configured to detect, during low-temperature driving of an electric automobile, in response to a passenger compartment heating signal, an actual temperature of coolant on an air conditioner side and generate a corresponding passenger compartment heating priority signal according to the actual temperature and a target temperature of an air conditioner;
a vehicle controller configured to obtain the passenger compartment heating priority signal and a battery thermal management demand signal, determine an initial value of an opening of a three-way proportional valve according to the passenger compartment heating priority signal, the battery thermal management demand signal, and a current vehicle state, control a passenger compartment heating and a battery heating according to the determined initial value of the opening of the three-way proportional valve, to obtain a battery heating result, look up a preset proportional valve adjustment table according to the battery heating result, to obtain an adjustment amount of the opening of the three-way proportional valve, and add the adjustment amount of the opening of the three-way proportional valve and the initial value of the opening of the three-way proportional valve, to obtain a current adjustment value of the opening of the three-way proportional valve;
a three-way proportional valve configured to acquire the current adjustment value of the opening of the three-way proportional valve and control the three-way proportional valve according to the current adjustment value of the opening of the three-way proportional valve.

9. An automobile controlling low-temperature driving thermal management of the electric automobile through the electric automobile low-temperature driving thermal management control method according to any one of claims 1-7.
